# FASCICULE DE BREVET EUROPEEN

(11) **EP 2 420 909 B1**
(45) Date de publication et mention de la délivrance du brevet: **10.12.2014**
(21) Numéro de dépôt: 11177235.6
(22) Date de dépôt: 11.08.2011
(51) Int. Cl.: G05D 1/00

(54) **Procédé de gestion d'un mouvement de lacet d'un aéronef roulant au sol**
Steuerungsverfahren einer Gierbewegung eines auf dem Boden rollenden Luftfahrzeugs
Method for managing a yaw movement of a taxiing aircraft.

(30) Priorité: 18.08.2010 FR 1056655
(43) Date de publication de la demande: 22.02.2012
(73) Titulaire: Messier-Bugatti-Dowty, 78140 Vélizy-Villacoublay (FR)
(72) Inventeur: Lemay, David, 92370 Chaville (FR); Frank, David, 75013 Paris (FR); Basset, Michel, 68990 Heimsbrunn (FR); Chamaillard, Yann, 45130 Le Bardon (FR)
(74) Mandataire: Parzy, Benjamin Alain

(56) Documents cités:
- US-A1- 2006 186 267
- US-A1- 2009 150 010
- J DUPREZ: "Chapitre 4 : Etude d'une loi de pilotage latéral de l'avion au sol", Automatisation du pilotage au sol pour la navigation portuaire , 6 mars 2007 (2007-03-06), pages 1-51, XP002620297, Université toulouse III-Paul Sabatier Extrait de l'Internet: URL:http://tel.archives-ouvertes.fr/docs/0 0/13/50/33/PDF/Memoire.pdf [extrait le 2011-04-04]
- DUPREZ J ET AL: "Control of the aircraft-on-ground lateral motion during low speed roll and manoeuvers", AEROSPACE CONFERENCE, 2004. PROCEEDINGS. 2004 IEEE,, vol. 4, 6 mars 2004 (2004-03-06), pages 2656-2666, XP010748389, IEEE, PISCATAWAY, NJ, USA DOI: 10.1109/AERO.2004.1368061 ISBN: 978-0-7803-8155-1

## Description

L'invention concerne un procédé de gestion d'un mouvement de lacet d'un aéronef roulant au sol.

On rappelle qu'un aéronef comporte un train d'atterrissage, qui comporte plusieurs atterrisseurs, dans le but d'assurer une interface entre l'aéronef et le sol.

### ARRIERE PLAN TECHNOLOGIQUE DE L'INVENTION

Habituellement, un pilote contrôle un mouvement de lacet d'un aéronef roulant au sol en agissant sur des organes de pilotage (pédales d'un palonnier, volant de commande ...). Dans le cas d'un aéronef comportant au moins un atterrisseur avec une partie basse orientable portant des roues, les organes de pilotage sollicitent directement, à partir d'une loi de pilotage dépendant de la vitesse de l'aéronef, la partie basse orientable.

La demande de brevet US 2009/0150010 décrit la génération d'une commande en vitesse de lacet pour assurer le suivi d'une trajectoire de roulage au sol par un avion.

La publication « Control of the aircraft-on-ground lateral motion during low speed roll and manoeuvers », DOI : 10.1109/AERO.2004.1368061 décrit une loi de commande linéarisée en vitesse de lacet d'un avion au sol.

Il est connu de la thèse « Automatisation du pilotage au sol pour la navigation portuaire » rédigé par M. Jean DUPREZ pour Airbus France - LAAS en 2004 (accessible sur le site Internet des thèses en ligne http://tel.archives-ouvertes.fr/) de modifier la loi de pilotage afin d'aider davantage le pilote à gérer le mouvement de lacet. La thèse décrit ainsi le procédé suivant :
- à partir d'un ordre généré par des organes de pilotage, déterminer un prépositionnement angulaire d'orientation des roues de la partie basse de l'atterrisseur;
- mettre en oeuvre une boucle d'asservissement ayant pour entrée le prépositionnement et générant une correction de celui-ci;
- orienter la partie basse d'un angle d'orientation égal au prépositionnement duquel on a soustrait la correction.

### OBJET DE L'INVENTION

L'objet de l'invention est de proposer un procédé de gestion d'un mouvement de lacet d'un aéronef roulant au sol dans lequel l'angle d'orientation de la partie basse est asservi de façon différente.

### BREVE DESCRIPTION DE L'INVENTION

En vue de la réalisation de ce but, on propose un procédé de gestion d'un mouvement de lacet d'un aéronef roulant au sol, l'aéronef comportant au moins un premier atterrisseur avec une partie basse orientable portant des roues.

Selon l'invention, le procédé comporte les étapes de :
- à partir d'une consigne de vitesse de lacet, déterminer un prépositionnement angulaire d'orientation des roues ;
- mettre en oeuvre une boucle d'asservissement ayant pour entrée la consigne de vitesse de lacet et générant un ordre d'orientation de la partie basse pour orienter celle-ci d'un angle d'orientation égal à la somme du prépositionnement et d'un angle qui est déterminé en tenant compte d'une erreur entre la consigne de vitesse de lacet et la vitesse de lacet mesurée lorsque la partie basse orientable est orientée de l'angle d'orientation.

Ainsi, la partie basse est orientée par régulation de l'angle d'orientation autour d'une position de prépositionnement de la partie basse.

Selon un mode de réalisation privilégié de l'invention, le procédé est appliqué à un aéronef comportant en outre au moins deux atterrisseurs principaux disposés respectivement à gauche et à droite du fuselage et dont les roues sont associées à des organes d'application de couple, le procédé comportant l'étape de générer, à destination des organes d'application de couple des atterrisseurs principaux gauche et droit, deux consignes d'accélération de sorte que les organes ainsi sollicités génèrent au niveau de l'aéronef un couple de lacet complémentaire au couple de lacet généré par le premier atterrisseur de sorte que le couple de lacet total généré au niveau de l'aéronef permette à l'aéronef de répondre à la consigne de vitesse de lacet.

Les organes d'application de couple sont par exemple des freins à friction et/ou des dispositifs de déplacement autonome, un dispositif de déplacement autonome comportant un moteur.

Le procédé selon l'invention permet ainsi de gérer de façon simultanée, par répartition du couple de lacet, à la fois l'orientation de la partie basse du premier atterrisseur et un différentiel de vitesses de rotation des atterrisseurs principaux. Le pilote n'a plus à se soucier de la façon dont les commandes sont réparties pour agir sur l'orientation de la partie basse et sur l'accélération des roues des atterrisseurs principaux.

### BREVE DESCRIPTION DES DESSINS

L'invention sera mieux comprise à la lumière de la description qui suit d'un mode de réalisation particulier non limitatif de l'invention en référence aux figures des dessins annexés parmi lesquels:
- la figure 1 est un schéma de principe de mise en oeuvre du procédé selon l'invention ;
- la figure 2 est un schéma de principe de mise en oeuvre du procédé selon l'invention dans un mode de réalisation privilégié.

### DESCRIPTION DETAILLEE DE L'INVENTION

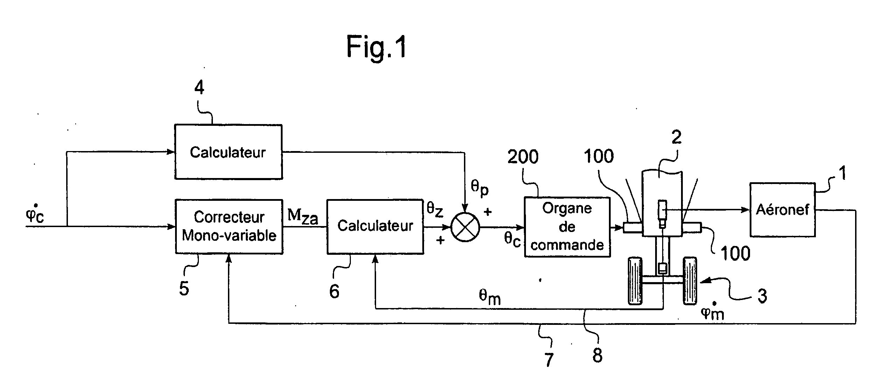

En référence à la figure 1, le procédé selon l'invention est détaillé en application à un aéronef 1 comportant au moins un premier atterrisseur avec une partie basse orientable portant des roues. L'aéronef 1 comporte ici un atterrisseur auxiliaire 2 qui est situé à l'avant du fuselage et qui comporte une partie basse 3 orientable par des actionneurs 100. Un organe de commande 200 contrôle les actionneurs 100 de la partie basse 3.

Un pilote souhaitant faire réaliser un mouvement de lacet à l'aéronef 1 roulant au sol agit alors sur différents organes de pilotage (comme des pédales de palonnier ou un volant de commande) pour générer une consigne de vitesse de lacet ϕ̇*_{c}*.

A partir de la consigne de vitesse de lacet ϕ̇*_{c}*, un calculateur 4 détermine un prépositionnement angulaire θ ₚ d'orientation des roues de la partie basse 3 par un calcul ici identique à celui explicité dans la thèse précitée.

Parallèlement, à partir de la consigne de vitesse de lacet ϕ̇*_{c}*, un correcteur mono-variable 5 détermine une consigne de couple de lacet M_{za} à générer au niveau de l'aéronef 1 par l'atterrisseur auxiliaire 2 de sorte que le couple de lacet M_{za} généré permette à l'aéronef 1 de répondre à la consigne de vitesse de lacet ϕ̇_{c}. Puis, un deuxième calculateur 6 traduit la consigne de couple de lacet M_{za} en une consigne d'angle θ_{z}. Une consigne d'angle d'orientation θ_{c} est ensuite générée à destination de l'organe de commande 200, l'angle d'orientation θ_{c} étant égal à la somme du prépositionnement θₚ et de l'angle θ_{z} déduit de la consigne de couple de lacet M_{za}. A partir de la consigne d'orientation θ_{c}, l'organe de commande 200 commande les actionneurs 100 pour que ceux-ci orientent la partie basse 3 de l'angle d'orientation θ_{c}.

Selon l'invention, à tout instant du mouvement de lacet, une mesure de la vitesse de lacet ϕ̇*ₘ* de l'aéronef 1 est effectuée. A partir de la vitesse de lacet mesurée ϕ̇ *ₘ* et de la consigne de vitesse de lacet ϕ̇*_{c}*, le correcteur mono-variable 5 détermine la consigne de couple de lacet M_{za} en tenant compte d'une erreur entre la consigne de vitesse de lacet ϕ̇_{c} et la vitesse de lacet mesurée ϕ̇*ₘ* lorsque la partie basse orientable est orientée de l'angle d'orientation θ_{c}. Ainsi la consigne d'angle θ_{z}, découlant directement de la consigne de couple de lacet M_{za}, est également déterminée en tenant compte d'une erreur entre la consigne de vitesse de lacet *ϕ̇*_{c} et la vitesse de lacet mesurée ϕ̇*ₘ*.

Grâce au prépositionnement, on obtient rapidement une vitesse de lacet de l'aéronef 1 proche de la consigne de vitesse de lacet *ϕ̇_{c}*. Puis, par une régulation 7 de l'angle d'orientation θ_{c} autour du prépositionnement, on obtient une vitesse de lacet de l'aéronef 1 conforme à la consigne de vitesse de lacet *ϕ̇_{c}*, au moins dans des conditions normales de fonctionnement d'orientation de la partie basse.

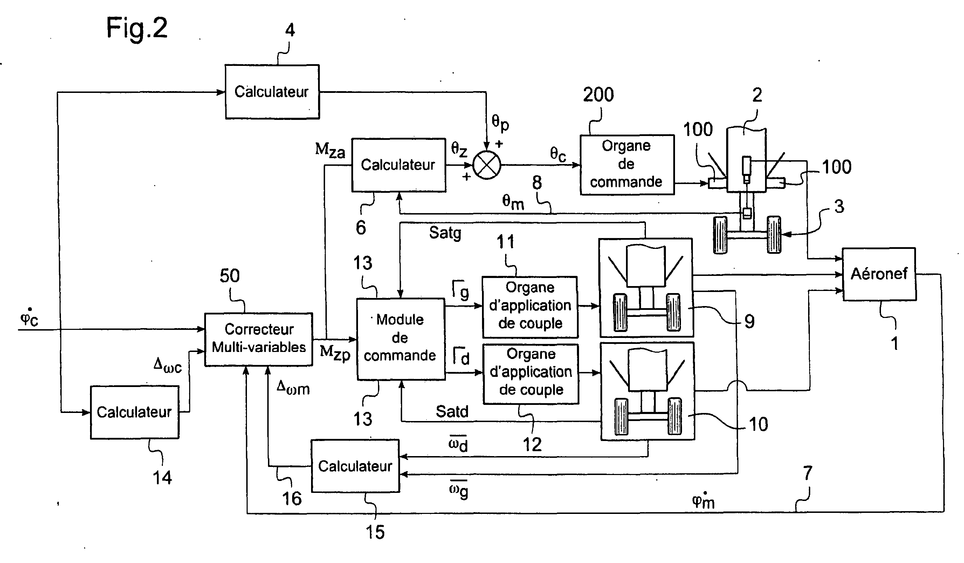

Ici, à tout instant du mouvement de lacet, une mesure de l'angle d'orientation θₘ est effectuée. A partir de l'angle d'orientation mesuré θₘ, le deuxième calculateur 6 détermine la consigne d'angle θ_{z}, découlant directement de la consigne de couple de lacet M_{za}, en tenant compte d'une erreur entre la consigne d'angle d'orientation θ_{c} et l'angle d'orientation mesuré θₘ (il est rappelé que les figures 1 et 2 sont uniquement des schémas de principe qui sont donnés à titre indicatif). Par une régulation 8 de l'angle d'orientation θ_{c}, on obtient un angle d'orientation conforme à la consigne d'angle d'orientation θ_{c} sans que la première régulation 7 n'intègre directement l'erreur entre la consigne d'angle d'orientation θ_{c} et l'angle d'orientation mesuré θₘ.

En référence à la figure 2, l'aéronef 1 comporte en outre au moins deux atterrisseurs principaux 9, 10 disposés respectivement à l'arrière gauche et droite du fuselage et dont les roues sont associées à des organes d'application de couple respectivement 11, 12. Par application d'un couple au niveau de l'aéronef 1, lesdits organes 11, 12 peuvent créer un différentiel de vitesse de rotation entre les roues de l'atterrisseur principal gauche 9 et l'atterrisseur principal droit 10. Selon un mode de réalisation privilégié, le procédé de l'invention intègre les organes d'application de couple 11, 12 de sorte à gérer de façon simultanée l'orientation de la partie basse 3 de l'atterrisseur 1 et un différentiel de vitesses de rotation des atterrisseurs principaux 9,10.

A cet effet, à partir de la consigne de vitesse de lacet ϕ̇*_{c}*, un correcteur multi-variables 50 détermine alors simultanément la consigne de couple de lacet M_{za} à générer au niveau de l'aéronef 1 par l'atterrisseur auxiliaire 2 et une consigne de couple de lacet complémentaire M_{zp} à générer au niveau de l'aéronef 1 par les organes d'application de couple 11,12 de sorte que le couple de lacet total, généré par l'atterrisseur auxiliaire 2 et les organes d'application de couple 11,12, permette à l'aéronef 1 de répondre à la consigne de vitesse de lacet ϕ̇*_{c}*.

De façon connue en soi, les organes d'application de couple 11, 12 sont commandés par un module de commande 13. A partir de la consigne de couple de lacet complémentaire M_{zp}, le module de commande 13 génère deux consignes d'accélération Γ_{g}, Γ_{d} à destination des organes d'application de couple 11, 12. Dans certaines circonstances (piste humide, moyens d'accélération défectueux...), il se peut que l'un ou plusieurs desdits organes ne puissent générer qu'une accélération limitée empêchant de réaliser la consigne de couple de lacet complémentaire M_{zp}. Dans ce cas, un signal de saturation Satg, Sat_{d} est envoyé par l'atterrisseur principal gauche 9 ou droit 10 concerné au module de commande 13 qui tient alors compte de cette saturation pour générer des consignes d'accélération Γ_{g}, Γ_{d} permettant de s'approcher au mieux de la consigne de couple de lacet complémentaire M_{zp} requise.

Selon l'invention à partir de la mesure de la vitesse de lacet ϕ̇*ₘ* et de la consigne de vitesse de lacet ϕ̇ *_{c}*, le correcteur multi-variables 50 détermine simultanément la consigne de couple de lacet M_{za} à générer par l'atterrisseur auxiliaire 2 et la consigne de couple de lacet complémentaire M_{zp} à générer par les organes d'application de couple 11, 12 de sorte que le couple de lacet total permette à l'aéronef 1 de répondre à la consigne de vitesse de lacet ϕ̇*_{c}*. Pour cela, le correcteur multi-variables 50 tient compte d'une erreur entre la consigne de vitesse de lacet ϕ̇*_{c}* et la vitesse de lacet mesurée ϕ̇*ₘ* lorsque la partie basse orientable 3 est orientée de l'angle d'orientation θ*_{c}* et les organes d'application de couple 11, 12 entrainés en rotation avec une accélération Γ_{g}, Γ_{d}. Par la première régulation 7, on obtient également une régulation en accélération des organes d'application de couple 11, 12.

Ici, un troisième calculateur 14 traduit la consigne de vitesse de lacet ϕ̇*_{c}* en une consigne de différentiel de vitesse de rotation Δ*ω_{c}*, ladite consigne étant ensuite transmise au correcteur multi-variables 50. En outre, à tout instant du mouvement de lacet, une mesure des vitesses de rotation moyenne *ω̅_{g},ω̅_{d}* des roues des atterrisseurs principaux respectivement gauche et droit 9,10 est effectuée. A partir des vitesses de rotation moyenne mesurées *ω̅_{g},ω̅_{d}* un quatrième calculateur 15 détermine un différentiel de vitesse de rotation mesuré Δ*ωₘ* qui est ensuite transmis au correcteur multi-variables 50. A partir de la consigne de différentiel de vitesse de rotation Δ*ω_{c}* et du différentiel de vitesse de rotation mesuré Δ*ωₘ*, le correcteur multi-variables 50 détermine alors la consigne de couple de lacet complémentaire M_{zp} à générer par les organes d'application de couple 11, 12 en tenant compte d'une erreur entre la consigne de différentiel de vitesse de rotation Δ*ω_{c}* et le différentiel de vitesse de rotation mesuré Δ*ωₘ*. Par une troisième régulation 16, on obtient les accélérations des roues des atterrisseurs principaux gauche et droit 9,10 conformes aux consignes d'accélération Γ_{g}, Γ_{d} sans que la première régulation 7 n'intègre directement l'erreur entre la consigne de différentiel de vitesse de rotation Δ*ω_{c}* et le différentiel de vitesse de rotation mesuré Δ*ωₘ*.

Bien entendu l'invention n'est pas limitée au mode de mise en oeuvre décrit et on peut y apporter des variantes de réalisation sans sortir du cadre de l'invention tel que défini par les revendications.

En particulier, en utilisant ici le terme d'accélération des roues des atterrisseurs principaux 9,10, on entend tout aussi bien une accélération positive des roues qu'une accélération négative des roues, l'accélération négative étant également nommée décélération.

Bien que l'on ait indiqué que l'aéronef 1 comportait un atterrisseur auxiliaire à l'avant 2 et deux atterrisseurs principaux à l'arrière 9, 10, les atterrisseurs pourront bien entendu avoir une toute autre disposition. En outre, l'aéronef 1 pourra comporter un tout autre nombre d'atterrisseurs et chaque atterrisseur pourra comporter un tout autre nombre de roues.

## Revendications

1. Procédé de gestion d'un mouvement de lacet d'un aéronef (1) roulant au sol, l'aéronef comportant au moins un premier atterrisseur (2) avec une partie basse (3) orientable portant des roues, le procédé étant **caractérisé en ce qu'**il comporte les étapes de :
- à partir d'une consigne de vitesse de lacet ϕ̇*_{c}*, déterminer un prépositionnement angulaire d'orientation des roues θp;
- mettre en oeuvre une boucle d'asservissement ayant pour entrée la consigne de vitesse de lacet et générant un ordre d'orientation de la partie basse pour orienter celle-ci d'un angle d'orientation θ_{c} égal à la somme de ce prépositionnement θp et d'un angle θ_{z} qui est déterminé en tenant compte d'une erreur entre la consigne de vitesse de lacet ϕ̇*_{c}* et la vitesse de lacet mesurée ϕ̇*ₘ* lorsque la partie basse orientable est orientée de l'angle d' orientation θ_{c}.

2. Procédé selon la revendication 1, dans lequel l'angle d'orientation θ_{c} est égal à la somme du prépositionnement θₚ et de l'angle θ_{z} qui est en outre déterminé en tenant compte d'une erreur entre l'angle d'orientation θ_{c} requis et un angle d'orientation mesuré θₘ.

3. Procédé selon la revendication 1, appliqué à un aéronef comportant en outre au moins deux atterrisseurs principaux (9,10) disposés respectivement à gauche et à droite du fuselage et dont les roues sont associées à des organes d'application de couple (11,12) le procédé comportant l'étape de générer, à destination des organes d'application de couple des atterrisseurs principaux gauche et droit (9,10), deux consignes d'accélération Γ_{g}, Γ_{d} de sorte que les organes ainsi sollicités génèrent au niveau de l'aéronef un couple de lacet M_{zp} complémentaire au couple de lacet M_{za} généré par le premier atterrisseur (2) de sorte que le couple de lacet total généré au niveau de l'aéronef permette à l'aéronef de répondre à la consigne de vitesse de lacet ϕ̇*_{c}*.

4. Procédé selon la revendication 3, dans lequel les consignes d'accélération Γ_{g}, Γ_{d} sont générées en tenant compte d'une erreur entre la consigne de vitesse de lacet *ϕ̇_{c}* et la vitesse de lacet mesurée ϕ̇*ₘ*.

5. Procédé selon la revendication 4, dans lequel les consignes d'accélération Γ_{g}, Γ_{d} sont générées en tenant compte en outre d'une erreur entre une consigne de différentiel de rotation *Δω_{c}* entre les roues des atterrisseurs principaux gauche et droit (9,10) et un différentiel de rotation Δω*ₘ* mesuré entre les roues des atterrisseurs principaux droit et gauche (9,10).

6. Procédé selon la revendication 3, dans lequel les consignes d'accélération Γ_{cg}, Γ_{cd} sont générées en tenant compte de saturations en accélération Satg, Sat_{d} des roues des atterrisseurs principaux droit et gauche (9,10).

## Patentansprüche

1. Verfahren zum Steuern einer Gierbewegung eines auf dem Boden rollenden Flugzeugs (1), wobei das Flugzeug mindestens ein erstes Fahrwerk (2) mit einem lenkbaren, Räder tragenden unteren Abschnitt (3) umfasst, wobei das Verfahren **dadurch gekennzeichnet ist, dass** es die Schritte umfasst:
- ausgehend von einem Giergeschwindigkeits-Sollwert ϕ̇*_{c}*, Bestimmen einer Ausrichtungswinkelvoreinstellung θₚ zur Ausrichtung der Räder,
- Anwenden eines Regelkreises, der als Eingangsgröße den Giergeschwindigkeits-Sollwert hat und eine Ausrichtungsfolge zur Ausrichtung des unteren Abschnitts erzeugt, um diesen in einem Ausrichtungswinkel θ_{c} auszurichten, der gleich der Summe dieser Voreinstellung θₚ und eines Winkels θ_{z} ist, der bestimmt wird, indem ein Fehler zwischen dem Giergeschwindigkeits-Sollwert ϕ̇*_{c}* und der gemessenen Giergeschwindigkeit *ϕ̇ₘ* berücksichtigt wird, wenn der lenkbare untere Abschnitt im Ausrichtungswinkel θ_{c} ausgerichtet ist.

2. Verfahren nach Anspruch 1, wobei der Ausrichtungswinkel θ_{c} gleich der Summe der Voreinstellung θₚ und des Winkels θ_{z} ist, der ferner bestimmt wird, indem ein Fehler zwischen dem erforderlichen Ausrichtungswinkel θ_{c} und einem gemessenen Ausrichtungswinkel θₘ berücksichtigt wird.

3. Verfahren nach Anspruch 1, angewandt bei einem Flugzeug, das ferner mindestens zwei Hauptfahrwerke (9, 10) umfasst, die links bzw. rechts des Rumpfes angeordnet und deren Räder mit Organen (11, 12) zum Ausüben eines Drehmoments verbunden sind, wobei das Verfahren den Schritt umfasst: Erzeugen zweier Beschleunigungs-Sollwerte Γ*_{g}*, Γ*_{d}* für die Organe zum Ausüben eines Drehmoments des linken und des rechten Hauptfahrwerks (9, 10), derart, dass die so beanspruchten Organe im Bereich des Flugzeugs ein Giermoment M_{zp} erzeugen, das komplementär zu dem Giermoment M_{za} ist, das von dem ersten Fahrwerk (2) erzeugt wird, derart, dass das im Bereich des Flugzeugs erzeugte Gesamt-Giermoment dem Flugzeug ermöglicht, auf den Giergeschwindigkeits-Sollwert ϕ̇_{c} anzusprechen.

4. Verfahren nach Anspruch 3, wobei die Beschleunigungs-Sollwerte Γ*_{g}*, Γ*_{d}* erzeugt werden, indem ein Fehler zwischen dem Giergeschwindigkeits-Sollwert ϕ̇*_{c}*, und der gemessenen Giergeschwindigkeit ϕ̇*ₘ* berücksichtigt wird.

5. Verfahren nach Anspruch 4, wobei die Beschleunigungs-Sollwerte Γ*_{g}*, Γ*_{d}* erzeugt werden, indem ferner ein Fehler zwischen einem Drehdifferenz-Sollwert *Δω_{c}* zwischen den Rädern des linken und des rechten Hauptfahrwerks (9, 10) und einer gemessenen Drehdifferenz Δω*ₘ* zwischen den Rädern des linken und des rechten Hauptfahrwerks berücksichtigt wird.

6. Verfahren nach Anspruch 3, wobei die Beschleunigungs-Sollwerte Γ_{*cg*,} Γ*_{cd}* erzeugt werden, indem Beschleunigungssättigungswerte Sat_{g}, Sat_{d} der Räder des linken und des rechten Hauptfahrwerks (9, 10) berücksichtigt werden.

## Claims

1. Method of controlling a yawing movement of an aircraft (1) running along the ground, the aircraft comprising at least one first landing gear (2) with a steerable bottom part (3) bearing wheels, the method being **characterized in that** it comprises the steps of:
- on the basis of a yaw rate setpoint ϕ̇*_{c}*, determining a wheel-steering prepositioning angle θₚ;
- using closed-loop control which as its input has the yaw rate setpoint and which generates a command to steer the bottom part in order to steer it through a steering angle θ_{c} equal to the sum of this prepositioning angle θₚ and of an angle θ_{z} which is determined taking account of an error between the yaw rate setpoint ϕ̇*_{c}* and the measured yaw rate θ*ₘ* when the steerable bottom part is steered by the steering angle θ_{c}.

2. Method according to Claim 1, in which the steering angle θ_{c} is equal to the sum of the prepositioning angle θₚ and of the angle θ_{z} which is further determined taking account of an error between the required steering angle θ_{c} and a measured steering angle θₘ.

3. Method according to Claim 1, applied to an aircraft further comprising at least two main landing gears (9,10) positioned respectively one on the left and one on the right of the fuselage and the wheels of which are associated with torque application members (11,12), the method comprising the step of generating, for the attention of the torque application members of the left and right main landing gears (9,10), two acceleration setpoints Γ₁, Γᵣ so that the members thus stimulated generate, on the aircraft, a yaw moment M_{zp} that complements the yaw moment M_{za} generated by the first landing gear (2), so that the total yaw moment generated on the aircraft allows the aircraft to comply with the yaw rate setpoint ϕ̇*_{c}*.

4. Method according to Claim 3, in which the acceleration setpoints Γ₁, Γᵣ are generated taking account of an error between the yaw rate setpoint ϕ̇*_{c}* and the measured yaw rate ϕ̇*ₘ*.

5. Method according to Claim 4, in which the acceleration setpoints Γₗ, Γᵣ are generated taking further account of an error between a rotation differential setpoint Δω_{c} that is the differential in rotation between the wheel of the left and right main landing gears (9,10) and a measured rotation differential Δωₘ that is the differential in rotation between the wheels of the right and left main landing gears (9,10).

6. Method according to Claim 3, in which the acceleration setpoints Γ_{cl}, Γ_{cr} are generated taking account of saturations in the accelerations Sat₁, Satᵣ of the wheels of the right and left main landing gears (9,10).
